# EUROPÄISCHE PATENTANMELDUNG

(11) **EP 2 397 997 A2**
(43) Veröffentlichungstag der Anmeldung: **21.12.2011**
(21) Anmeldenummer: 11163795.5
(22) Anmeldetag: 27.04.2011
(51) Int. Cl.: G07B 15/06

(54) **Erfassungsgerät für ein Mautsystem, Mautsystem und ein Verfahren zur Ermittlung einer Maut**

(30) Priorität: 17.06.2010 DE 102010030200
(71) Anmelder: Robert Bosch GmbH, 70442 Stuttgart (DE)
(72) Erfinder: Landau, Andreas, 37073, Göttingen (DE); Ebert, Dominik, 31134, Hildesheim (DE)

(57) **Zusammenfassung**

Die Erfindung betrifft ein Mautsystem 3 für Verkehrswege, das ein Erfassungsgerät 4 nach einem der Ansprüche 1 bis 4 und eine Abrechnungseinheit 5 mit einem Empfangsmodul 8 und einem Mautberechnungsmodul 6 aufweist, wobei das Erfassungsgerät 4 in einem Kraftfahrzeug angeordnet ist und mit der Abrechnungseinheit 5 durch das Sende- und Empfangsmodul 8, 80 verbunden ist, wobei das Sende- und Empfangsmodul 8, 80 ausgelegt ist, die vom Erfassungsgerät 4 erfasste Schadstoffmengeninformationen an die Abrechnungseinheit 5 zu übertragen und dem Mautberechnungsmodul 6 der Abrechnungseinheit 5 bereitzustellen, und wobei das Mautberechnungsmodul 6 ausgelegt ist, die Schadstoffmengeninformationen bei einer Ermittlung einer Maut zu berücksichtigen.

## Beschreibung

Die Erfindung betrifft ein Mautsystem für Verkehrswege, das eine Abrechnungseinheit, eine Sende- und Empfangseinrichtung und ein Erfassungsgerät umfasst, wobei das Erfassungsgerät in einem Kraftfahrzeug angeordnet ist und mit der Abrechnungseinheit durch die Sende- und Empfangseinrichtung verbunden ist.

### Stand der Technik

Aus der DE 20 2004 004 379 U1 1 ist ein elektronisches Mautsystem für Verkehrswege bekannt, welches ein zellulares, eine Vielzahl von Mobilfunkzellen umfassendes Mobilkommunikationssystem verwendet. Das Mautsystem umfasst mindestens eine Mautzentrale zur Abwicklung des Mautgeschäfts zwischen einem Mautkunden und einem Mautbetreiber. Dabei umfasst das System einen Datenspeicher in der Mautzentrale zur Speicherung von Identifikationsdaten von Mautkunden und Angaben zu den zugeordneten geplanten Fahrtrouten, die mindestens die Benutzung eines mautpflichtigen Streckenabschnitts enthalten. Ferner umfasst das System einen Speicher zur Aufnahme einer hinreichenden Liste von Funkzellen eines auf der geplanten Fahrtroute vorhandenen Mobilkommunikationssystems, wobei die Liste von einem dem Mautkunden zugeordneten Mautendgerät übermittelt wird. Das Mautsystem umfasst auch eine Datenverarbeitungseinheit zur Verifikation der vom Mautkunden übermittelten Funkzellendaten. Dabei werden die Funkzellendaten mit Solldaten für die betreffend gebuchte Fahrtroute verglichen. Ferner wird durch eine Abrechnungseinheit eine zu erhebende Mautgebühr ermittelt, die anhand der vom Mautkunden gebuchten Fahrtstrecke und der vorgegebenen Tarifdaten bestimmt wird.

Ferner ist aus der JP-2006-209228 A ein Verfahren für ein elektronisches Mautsystem bekannt, wobei anhand eines Benutzungsstatus einer mautpflichtigen Straße ein elektronisches Mautsystem Emissionsrechte an die Benutzer verteilt.

Bei den genannten Mautsystemen wird die Maut in Abhängigkeit einer Fahrtstrecke ermittelt. Die Fahrweise des Fahrzeugführers, in der die Fahrtstrecke zurückgelegt wird, wird jedoch von den Mautsystemen nicht berücksichtigt.

### Offenbarung der Erfindung

Es ist daher Aufgabe der Erfindung, ein verbessertes Mautsystem, ein Erfassungsgerät für ein Mautsystem und ein Verfahren zur Ermittlung einer Maut bereitzustellen.

Diese Aufgabe wird durch ein Erfassungsgerät für ein Mautsystem gemäß Anspruch 1, durch ein Mautsystem gemäß Anspruch 5 und durch ein Verfahren gemäß Anspruch 9 gelöst. Weitergehende Ausführungsformen sind in den abhängigen Ansprüchen angegeben.

Die Erfindung wird durch ein Erfassungsgerät für ein Mautsystem mit einem Sendemodul und einem Emissionsberechnungsmodul gelöst. Dabei ist das Erfassungsgerät in einem Kraftfahrzeug angeordnet, wobei das Sendemodul eine Datenverbindung zu einer Abrechnungseinheit des Mautsystems bereitstellt. Das Erfassungsmodul umfasst ferner ein Abgaserfassungsmodul, das mit dem Emissionsberechnungsmodul verbunden ist und eine von dem Kraftfahrzeug in die Umwelt emittierte Menge von Schadstoffen erfasst und dem Emissionsberechnungsmodul als Schadstoffmengeninformation bereitstellt. Das Emissionsberechnungsmodul verarbeitet die von dem Abgaserfassungsmodul bereitgestellten Schadstoffmengeninformationen für eine Mautermittlung weiter.

Dies hat den Vorteil, dass für die Berechnung einer Maut für einen Streckenabschnitt ein realer, von einem Kraftfahrzeug emittierter Schadstoffausstoß für einen Verkehrsweg herangezogen werden kann. Dieser ist üblicherweise von der Fahrweise eines Fahrzeugführers abhängig, sodass der Fahrzeugführer durch eine von seiner Fahrweise abhängige Maut angehalten wird, mit einer effizienten Fahrweise die Fahrtstrecke zu bewältigen.

In einer weiteren Ausführungsform der Erfindung weist das Abgaserfassungsmodul einen Sensor auf, der in einem Abgassystem des Kraftfahrzeugs angeordnet und ausgelegt ist, die von dem Kraftfahrzeug emittierten Schadstoffe oder einzelner Schadstoffe wie CO, CO2, NOx, etc. und/oder deren Menge zu erfassen. Auf diese Weise kann eine zuverlässige Erfassung abhängig von den Betriebsparametern einer Brennkraftmaschine der Schadstoffausstoß ermittelt werden.

In einer weiteren Ausführungsform der Erfindung ist das Abgaserfassungsmodul mit einem Steuergerät der Brennkraftmaschine des Kraftfahrzeugs verbunden, wobei das Steuergerät ausgelegt ist, Informationen über einen Betriebszustand der Brennkraftmaschine dem Abgaserfassungsmodul bereitzustellen, wobei das Abgaserfassungsmodul aus den Informationen über den Betriebszustand der Brennkraftmaschine die Schadstoffmengeninformationen ermittelt. Auf diese Weise können die Schadstoffemissionen kostengünstig für das Mautsystem ermittelt werden.

In einer weiteren Ausführungsform der Erfindung umfasst das Erfassungsgerät ein Speichermodul, in welchem das Erfassungsgerät die für ein Zeitintervall mittels des Abgaserfassungsmoduls erfassten Schadstoffmengeninformationen ablegt und mittels des Sendemoduls nach einem Zeitintervall die in dem Speichermodul abgelegten Schadstoffmengeninformationen an die Abrechungseinheit überträgt. Auf diese Weise können auch bei einer temporär nicht vorherrschenden Verbindung zwischen dem Erfassungsgerät und der Abrechungseinheit die in der Zwischenzeit emittierten Schadstoffe erfasst und für das Mautsystem abgerechnet werden.

Erfindungsgemäß wird ferner ein Mautsystem für Verkehrswege vorgeschlagen, das ein oben beschriebenes Erfassungsgerät und eine Abrechnungseinheit mit einem Empfangsmodul und einem Mautberechnungsmodul aufweist. Das Erfassungsgerät ist in einem Kraftfahrzeug angeordnet und mit der Abrechnungseinheit durch das Sende- und Empfangsmodul verbunden. Das Sende- und Empfangsmodul überträgt die vom Erfassungsgerät erfassten Schadstoffmengeninformationen an die Abrechnungseinheit und stellt die Schadstoffmengeninformationen dem Mautberechnungsmodul der Abrechnungseinheit zur Verfügung, wobei das Mautberechnungsmodul die Schadstoffmengeninformationen bei einer Ermittlung einer Maut berücksichtigt. Auf diese Weise kann ein Mautsystem zur Verfügung gestellt werden, dass in Abhängigkeit des Schadstoffausstoßes, also in Abhängigkeit der Fahrweise des Fahrzeugführers, aber auch des Fahrzeugtyps, die Maut für einen befahrenen Streckenabschnitt ermittelt.
In einer weiteren Ausführungsform der Erfindung weist das Mautsystem ein Emissionshandelsmodul auf, das an einer Emissionshandelsbörse ein Emissionszertifikat erwirbt. Die Abrechungseinheit ermittelt anhand der vom Abgaserfassungsmodul erfassten Menge an emittierten Schadstoffen einen Anteil an dem vom Emissionshandelsmodul erworbenen Emissionszertifikat. Auf diese Weise kann zuverlässig der durch die Fahrweise des Fahrzeugführers entstandene Schadstoffausstoß einem gewährten Emissionszertifikat zugeschrieben werden.

In einer weiteren Ausführungsform der Erfindung ist das Emissionshandelsmodul ausgelegt, bei einem Überschreiten eines Schwellenwerts an kumulierten Anteilen an einem Emissionszertifikat ein weiteres Emissionszertifikat an der Emissionshandelsbörse zu erwerben. Auf diese Weise wird sichergestellt, dass dem Betreiber des Mautsystems für die Nutzung von Straßenverkehr ausreichend Emissionszertifikate zustehen.

In einer weiteren Ausführungsform der Erfindung ist das Mautberechnungsmodul der Abrechnungseinheit ausgelegt, eine Maut für die Nutzung der Verkehrswege anhand des Anteils an einem Emissionszertifikat zu ermitteln. Auf diese Weise wird die Maut abhängig von den Handelspreisen für die Emissionszertifikate ermittelt, sodass bei einer erhöhten Nachfrage nach Emissionszertifikaten, also auch bei einer erhöhten Schadstoffbelastung, die Maut erhöht wird, sodass der Fahrzeugführer angehalten ist, bei einer erhöhten Maut eine Fahrtstrecke in einer umweltschonenderen Fahrweise abzufahren.

Unter Schadstoffmenge wird in diesem Rahmen je nach Ausführung die Menge des gesamten Schadstoffes eines Fahrzeug während des Betriebs oder die Menge einzelner Schadstoffkomponenten wie CO2, CO, Stickoxide, Feinstaub oder Kohlenwasserstoffe, oder eine beliebige Kombination davon verstanden.

Nachfolgend wird die Erfindung anhand von Figuren näher erläutert. Dabei zeigen:

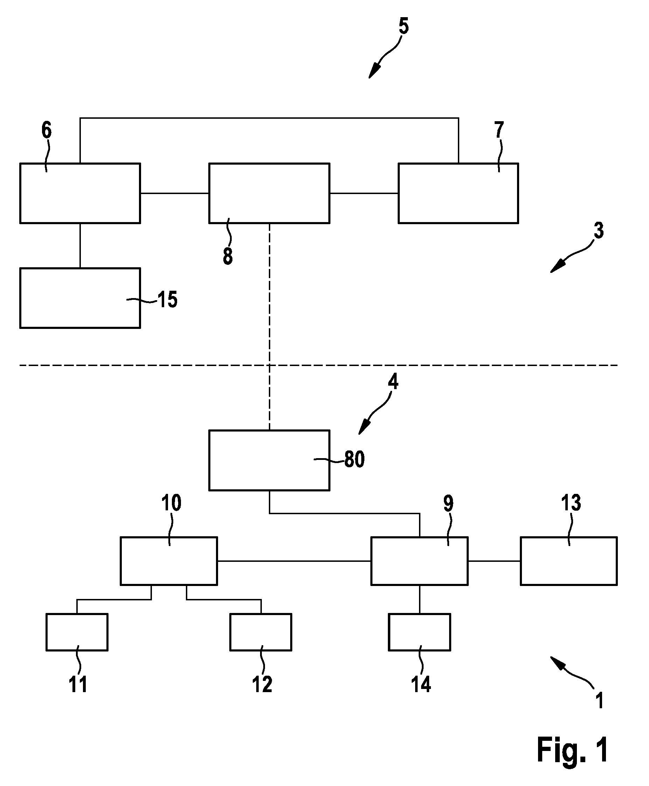

Fig. 1 eine schematische Darstellung eines Mautsystems.

Fig. 1 zeigt eine schematische Darstellung eines Mautsystems 3 für Verkehrswege. Das Mautsystem 3 umfasst eine Abrechungseinheit 5 und ein Erfassungsgerät 4. Das Erfassungsgerät 4 ist in einem Kraftfahrzeug eingebaut. Die Abrechungseinheit 5 ist beispielsweise in einer Zentrale eines Mautbetreibers angeordnet. Das Erfassungsgerät 4 und die Abrechnungseinheit 5 umfassen jeweils ein Sende- und Empfangsmodul 8, 80. Die Abrechungseinheit 5 umfasst ferner ein Emissionshandelsmodul 7, ein Verrechungsmodul 15 sowie ein Mautberechnungsmodul 6. Sowohl das Emissionshandelsmodul 7 als auch das Mautberechnungsmodul 6 und ein erstes Sende- und Empfangsmodul 8 sind jeweils miteinander verbunden. Das Verrechnungsmodul 15 ist mit dem Mautberechungsmodul 6 verbunden.

Das Erfassungsgerät 4 umfasst ein zweites Sende- und Empfangsmodul 80, ein Abgaserfassungsmodul 10 sowie ein Emissionsberechnungsmodul 9 und einen Speicher 13. Das Abgaserfassungsmodul 10 ist mit einem Sensor 11 sowie mit einem Steuergerät 12 einer nicht dargestellten Brennkraftmaschine verbunden. Der Sensor 11 ist dabei als Abgassensor zur Erfassung der ausgestoßenen Menge an Abgasen, insbesondere den darin enthaltenen Schadstoffen oder einzelner Komponenten wie CO, CO2, NOx, Feinstaub, etc., ausgebildet. Ebenso wäre eine Ausbildung als Lambda-Sonde, als Schadstoffsensor, oder als Luftmassensensor denkbar. Das Emissionsberechnungsmodul 9 ist dabei mit dem Abgaserfassungsmodul 10, dem Speicher 13 und dem zweiten Sende- und Empfangsmodul 80 verbunden.

Das Steuergerät 12 der Brennkraftmaschine des Kraftfahrzeugs ist ausgelegt, die Brennkraftmaschine entsprechend einem Fahrerwunsch, der diesen über ein Fahrpedal äußert, zu steuern. Dazu erfasst das Steuergerät 12 eine Stellung des Fahrpedals. Das Steuergerät 12 steuert die Brennkraftmaschine anhand der Fahrpedalstellung und einer tabellarischen Zuordnung des Betriebszustands an. Das Abgaserfassungsmodul 10 erfasst die vom Sensor 11 erfassten Daten über die in eine Umwelt emittierten Abgase des Kraftfahrzeugs. Je nach Ausbildung des Sensors 11 werden dem Abgaserfassungsmodul 10 beispielsweise Informationen über einen Restsauerstoffgehalt im Abgas, über eine Zusammensetzung von Schadstoffen und/oder eine Menge von Schadstoffen, beispielsweise gemessen in Volumeneinheiten, zur Verfügung gestellt. Das Steuergerät 12 der Brennkraftmaschine stellt dem Abgaserfassungsmodul 10 je nach Ausbildungsform des Sensors 11 Informationen über einen Betriebszustand, beispielsweise eine Drehzahl, eine Einspritzmenge, einen Fahrerwunsch und/oder ein Zündintervall zur Verfügung. Das Abgaserfassungsmodul 10 ermittelt aus dem vom dem Sensor 11 und gegebenenfalls aus dem vom Steuergerät 12 zur Verfügung gestellten Informationen die von der Brennkraftmaschine emittierte Menge von Schadstoffen. So kann beispielsweise aus einer Drehzahl der Brennkraftmaschine und dem Messergebnis der Lambdasonde, also einer Messung des Restsauerstoffs des Abgases, eine bei der Verbrennung des Kraftstoffs der Brennkraftmaschine entstandene CO₂-Menge ermittelt werden.

Die ermittelte emittierte Schadstoffmenge für einen Verkehrsweg wird dem Emissionsberechnungsmodul 9 als Schadstoffmengeninformation zur Verfügung gestellt. Das Emissionsberechnungsmodul 9 legt die ermittelte Schadstoffmengeninformationen in dem Speichermodul 13 ab. Nach Erreichen eines vorbestimmten Zeitintervalls liest das Emissionsberechnungsmodul 9 das Speichermodul 13 aus und integriert die abgelegten Werte für die emittierten Schadstoffe auf, um einen Gesamtausstoß von Schadstoffen durch die Brennkraftmaschine für den mautpflichtigen Verkehrsweg zu ermitteln. Es ist aber auch denkbar, dass das Emissionsberechnungsmodul 9 kontinuierlich die von dem Abgaserfassungsmodul 10 bereitgestellten Werte des emittierten Schadstoffausstoßes aufintegriert. Der ermittelte Gesamtschadstoffausstoß kann ebenso in dem Speichermodul 13 als Gesamtschadstoffmengeninformation abgelegt werden, um bei Verfügbarkeit einer Datenverbindung zwischen dem ersten und dem zweiten Sende- und Empfangsmodul 8, 80 über das zweite Sende- und Empfangsmodul 80 die ermittelte Gesamtschadstoffmengeninformation an die Abrechungseinheit 5 zu übertragen. Dies kann beispielsweise über ein bestehendes Mobilfunknetz entlang des Verkehrsweges oder über eine an einem Mautterminal bestehende Bluetooth-Verbindung erfolgen.

Ein Emissionszertifikat wird von dem Emissionshandelsmodul 7 der Abrechnungseinheit 5 an einer Emissionshandelsbörse zu einem Kaufpreis erworben. Das Emissionszertifikat erlaubt dabei einen festgesetzten Schadstoffausstoß für einen Zeitraum. Die Informationen über das Emissionszertifikat stellt das Emissionshandelsmodul 7 dem Mautberechnungsmodul 6 zur Verfügung. Das Mautberechnungsmodul 6 ermittelt auf Grundlage der vom ersten Sende- und Empfangsmodul 8 bereitgestellten Gesamtschadstoffinformation einen Anteil an dem Emissionszertifikat. Auf Grundlage eines Kaufpreises für das Emissionszertifikat und des Anteils an dem Emissionszertifikat ermittelt das Mautberechnungsmodul 6 eine Maut für das Abfahren der Fahrtstrecke bzw. für die bereitgestellte Gesamtschadstoffinformation. Dies hat den Vorteil, dass bei der Mauterhebung die Fahrweise des Fahrzeugführers berücksichtigt wird, da eine zügige Fahrweise einen höheren Schadstoffausstoß als eine kraftstoffsparende Fahrweise aufweist. Auf diese Weise kann der Fahrzeugführer über die Mautgebühr zu einer kraftstoffsparenden Fahrweise motiviert werden.

Das Mautberechnungsmodul 6 überträgt mittels der Sende- und Empfangsmodule 8, 80 eine Information über die Maut an das Erfassungsgerät 4. Ferner stellt das Mautberechnungsmodul 6 dem Verrechnungsmodul 15 eine Information über die Maut zur Verfügung, das ausgelegt ist, die Maut mit einem für das Fahrzeug hinterlegten Guthaben zu verrechnen und/oder von einem Kontokorrentkonto des Fahrzeughalters einzuziehen. Das Erfassungsgerät 4 zeigt dem Fahrer den angefallenen Wert des Mautbetrags über das Anzeigenmodul 14 an, das beispielsweise im Bereich der Anzeigenelemente des Kraftfahrzeugs angeordnet ist.

Alternativ ist auch denkbar, dass zur Ermittlung der Gesamtschadstoffmengeninformation das Abgaserfassungsmodul 10 nur mit dem Steuergerät 12 der Brennkraftmaschine ohne Verbindung zu dem Sensor 11 verbunden ist und auf Grundlage der Informationen des Steuergeräts 12 der Brennkraftmaschine über eine Drehzahl der Brennkraftmaschine, einer Einspritzmenge von Kraftstoff in eine Brennkammer und dem Volumen der Brennkammer eine Schadstoffemission ermittelt. Der emittierte Schadstoffausstoß kann dabei aufgrund einer tabellarischen Zuordnung von Messwerten einer Brennkraftmaschine gleichen Typs ermittelt werden. Auf diese Weise kann auf einen Einbau eines Sensors 11 im Abgassystem des Kraftfahrzeugs verzichtet werden, wobei das Mautsystem 3 und das Erfassungsgerät 4 kostengünstig ausgebildet sind.

Ferner ist denkbar, dass das Erfassungsgerät 4 und die Abrechnungseinheit 5 in nahezu fortwährendem Datenaustausch über die Sende- und Empfangsmodule 8, 80 befinden. Auf diese Weise kann dem Fahrzeugführer kontinuierlich der Wert der Mautgebühr für sein Fahrverhalten durch die kontinuierliche Ermittlung der Schadstoffemissionen und der Verrechnung mit den Kosten für ein Emissionszertifikat auf dem Anzeigenmodul 14 angezeigt werden.

Ferner ist alternativ denkbar, dass das Mautberechungsmodul 6 statt in der Abrechnungseinheit 5 im Erfassungsgerät 4 angeordnet ist, wobei die Ermittlung der Maut wie beschrieben erfolgt, jedoch stellt die Abrechungseinheit 5 dem Erfassungsgerät über die Sende- und Empfangsmodule statt einer Maut eine Maut pro Einheit des Schadstoffausstoßes zur Verfügung. Das Mautberechungsmodul 6 ermittelt aus der von dem Emissionsberechnungsmodul 9 bereitgestellten Gesamtschadstoffmengeninformation eine Mautgebühr, wobei das Erfassungsgerät 4 die ermittelte Mautgebühr mittels der Sende- und Empfangsmodule 8, 80 zur weiteren Verarbeitung an die Abrechungseinheit 5 überträgt.

Ferner ist denkbar, dass das zweite Sende- und Empfangsmodul 80 des Erfassungsgeräts 4 ausschließlich als Sendemodul und das erste Sende- und Empfangsmodul 8 der Abrechnungseinheit 5 als Empfangsmodul ausgelegt ist, das eine Information des Sendemoduls des Erfassungsgeräts 4 empfängt und dem Mautberechnungsmodul 6 zur Ermittlung der Maut bereitstellt.

Ferner ist denkbar, dass das Mautberechnungsmodul 6 ausgelegt ist, die Anteile von mehreren Fahrzeugen an einem Emissionszertifikat aufzusummieren, um so einen Verbrauch des Emissionszertifikats zu ermitteln. Dabei ist denkbar, dass bei Überschreitung eines Schwellenwerts für einen Verbrauch eines Emissionszertifikats das Emissionshandelsmodul 7 an der Emissionshandelsbörse ein weiteres Emissionszertifikat erwirbt, um fortwährend eine ausreichende Deckung des Mautsystems mit Emissionszertifikaten zu gewährleisten.

## Patentansprüche

1. Erfassungsgerät (4) für ein Mautsystem (3) mit einem Sendemodul (80) und einem Emissionsberechnungsmodul (9), wobei das Erfassungsgerät (4) in einem Kraftfahrzeug angeordnet ist, und das Sendemodul (8) ausgelegt ist, eine Verbindung zu einer Abrechnungseinheit (5) des Mautsystems (3) bereitzustellen, **gekennzeichnet durch** ein Abgaserfassungsmodul (10), das mit dem Emissionsberechnungsmodul (9) verbunden und ausgelegt ist, die von einem Kraftfahrzeug in die Umwelt eine emittierte Menge wenigstens eines Schadstoffen zu erfassen und dem Emissionsberechnungsmodul (9) als Schadstoffmengeninformation bereitzustellen, und das Emissionsberechnungsmodul (9) ausgelegt ist, die von dem Abgaserfassungsmodul (10) bereitgestellten Schadstoffmengeninformationen für eine Mautermittlung weiterzuverarbeiten.

2. Erfassungsgerät (4) nach Anspruch 1, **dadurch gekennzeichnet, dass** das Abgaserfassungsmodul (10) einen Sensor (11) aufweist, der in einem Abgassystem eines Kraftfahrzeugs angeordnet und ausgelegt ist, die von dem Kraftfahrzeug emittierte Menge wenigstens eines Schadstoffs zu erfassen.

3. Erfassungsgerät (4) nach Anspruch 1 oder 2, **dadurch gekennzeichnet, dass** das Abgaserfassungsmodul (10) mit einem Steuergerät (12) einer Brennkraftmaschine eines Kraftfahrzeug verbunden ist, wobei das Steuergerät (12) ausgelegt ist, dem Abgaserfassungsmodul (10) Informationen über einen Betriebszustand der Brennkraftmaschine bereitzustellen, wobei das Abgaserfassungsmodul ausgelegt ist, aus den bereitgestellten Informationen über den Betriebszustand der Brennkraftmaschine die Schadstoffmengeninformationen zu ermitteln.

4. Erfassungsgerät (4) nach einem der Ansprüche 1 bis 3, **dadurch gekennzeichnet, dass** das Erfassungsgerät (4) ein Speichermodul (13) umfasst, wobei das Erfassungsgerät (4) ausgelegt ist, die für ein Zeitintervall mittels des Abgaserfassungsmoduls (10) erfassten Schadstoffmengeninformationen in dem Speichermodul (13) abzulegen, und das Sendemodul (8) ausgelegt ist, nach dem Zeitintervall die im Speichermodul (13) abgelegten Schadstoffmengeninformationen an die Abrechnungseinheit (3) zu übertragen.

5. Mautsystem (3) für Verkehrswege, das ein Erfassungsgerät (4) nach einem der Ansprüche 1 bis 4 und eine Abrechnungseinheit (5) mit einem Empfangsmodul (8) und einem Mautberechnungsmodul (6) aufweist, **dadurch gekennzeichnet, dass** das Erfassungsgerät (4) in einem Kraftfahrzeug angeordnet ist und mit der Abrechnungseinheit (5) durch das Sende- und Empfangsmodul (8, 80) verbunden ist, wobei das Sende- und Empfangsmodul (8, 80) ausgelegt ist, die vom Erfassungsgerät (4) erfasste Schadstoffmengeninformationen an die Abrechnungseinheit (5) zu übertragen und dem Mautberechnungsmodul (6) der Abrechnungseinheit (5) bereitzustellen, und wobei das Mautberechnungsmodul (6) ausgelegt ist, die Schadstoffmengeninformationen bei einer Ermittlung einer Maut zu berücksichtigen.

6. Mautsystem (3) nach Anspruch 5, **gekennzeichnet durch** eine Emissionshandelsmodul (7), das ausgelegt ist, an einer Emissionshandelsbörse ein Emissionszertifikat zu erwerben, wobei die Abrechungseinheit (5) ausgelegt ist, anhand der vom Abgaserfassungsmodul (10) erfassten emittierten wenigstens eines Schadstoffen einen Anteil an dem vom Emissionshandelsmodul (7) erworbenen Emissionszertifikat zu ermitteln.

7. Mautsystem (3) nach Anspruch 6, **dadurch gekennzeichnet, dass** das Emissionshandelsmodul (7) ausgelegt ist, bei einem Überschreiten eines Schwellenwerts an kumulierten Anteilen an einem Emissionszertifikat ein weiteres Emissionszertifikat an der Emissionshandelsbörse zu erwerben.

8. Mautsystem (3) nach Anspruch 6 oder 7, **dadurch gekennzeichnet, dass** das Mautberechnungsmodul (6) der Abrechnungseinheit (5) ausgelegt ist, eine Maut für die Nutzung der Verkehrswege anhand des Anteils an dem Emissionszertifikat zu ermitteln.

9. Verfahren zur Ermittlung einer Maut eines Verkehrsweges, wobei eine Abrechungseinheit (5), ein Sende- und Empfangsmodul (8) und ein Erfassungsgerät (4) bereitgestellt werden, wobei das Erfassungsgerät (4) in einem Kraftfahrzeug angeordnet und mit der Abrechnungseinheit (5) durch das Sende- und Empfangsmodul (8) verbunden ist, **dadurch gekennzeichnet, dass** das Abgaserfassungsmodul (10) eine Menge von wenigstens einem in die Umwelt emittierten Schadstoffs des Kraftfahrzeugs erfasst und als Schadstoffmengeninformation dem Erfassungsgerät (4) bereitstellt und das Erfassungsgerät (4) die erfassten Schadstoffmengeninformationen über das Sende- und Empfangsmodul (8) an die Abrechungseinheit (5) überträgt, das die Schadstoffmengeninformationen bei einer Ermittlung einer Maut berücksichtigt.
